(19)

**Europäisches Patentamt**

**European Patent Office**

**Office européen des brevets**

(11) **EP 4 686 146 A1**

(12) **EUROPEAN PATENT APPLICATION**

(43) Date of publication:
28.01.2026  Bulletin 2026/05

(21) Application number: 24190733.6

(22) Date of filing: 24.07.2024

(51) International Patent Classification (IPC):
*H04L 9/32* (2006.01)        *H04L 9/00* (2022.01)

(52) Cooperative Patent Classification (CPC):
**H04L 9/50; H04L 9/3239; H04L 9/3263**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Università degli Studi di Camerino
62032 Camerino (MC) (IT)**

(72) Inventors:
• **MOSTARDA, Leonardo
02100 Rieti (IT)**
• **CORRADINI, Flavio
62100 Macerata (IT)**
• **SESTILI, Davide
63848 Petritoli (FM) (IT)**

(74) Representative: **Leone, Mario et al
Cantaluppi & Partners S.r.l.
VIA XX Settembre, 98g
00187 Roma (IT)**

(54) **PROCESS FOR THE EXECUTION OF SMART CONTRACTS**

(57)     Smart contracts are self-executable programs that run when certain predetermined conditions are met. The advent of blockchain technologies has provided the means to execute smart contracts in a decentralized manner without the need to trust a central authority: the proper execution of the smart contract is ensured by the consensus protocol of the blockchain on which it is deployed. Blockchain smart contracts, properties of trustless execution, make them an attractive technology for IoT. However, IoT applications often require the processing of large amounts of data that are often difficult to manage in a blockchain environment. In fact, traditional blockchains can only process a few transactions per second, making them unsuitable for the needs of many IoT applications. Additionally, traditional public blockchains require users to pay fees for each piece of data committed to the chain, which makes the use of blockchains too expensive in many IoT case scenarios, as they often involve IoT devices exchanging large amounts of messages. In this thesis, a solution for the execution of smart contracts that improves scalability on blockchain in terms of throughput and cost is presented. The solution is particularly suitable for the IoT but its generality makes it possible to use it in a variety of scenarios not necessarily related to the Internet of Things.

*Fig. 1*

**EP 4 686 146 A1**

## Description

The object of this invention is a computer-implemented management process, generally known as computer implemented method (CI method), for the executions of smart contracts.

Further, embodiments of the present invention are in the field of decentralized resource sharing, and they particularly pertain to processes and informatic systems for a distributed computation platform.

Generally speaking, a smart contract is a computer program, or a transaction protocol, intended to automatically execute, control or document events and actions according to the terms of a contract or a generic agreement. The objectives of smart contracts are the reduction of need for trusted intermediaries, arbitration costs, and fraud losses, as well as the reduction of malicious and accidental exceptions.

In particular, smart contracts are meant to be digital contracts associated to a blockchain that are automatically executed when predetermined terms and conditions are met.

Smart contracts are therefore typically used to automate the execution of an agreement so that all users can be immediately ensured about the outcome, without any intermediary or without wasting time. Smart contracts can also automate a workflow, triggering the next action when predetermined conditions by a previous action are met.

The concept of smart contracts was introduced before the advent of blockchains, and it is described as a computerized transaction protocol that executes the terms of a contract. The trustless nature, which does not depend on third parties, typical of blockchain, has proved to be the ideal environment for the implementation of smart contracts, with the possibility of inserting portions of code capable of specifying the requirements to be met to spend a transaction output.

Blockchain technology was introduced by Satoshi Nakamoto as a solution for allowing electronic payments between users without having to trust a centralized institution. The problem Nakamoto's work addressed was the problem of creating a distributed storage of timestamped documents that no user could tamper with without being detected. These kinds of distributed storage systems were called *Distributed ledgers.*

In the following description, the term "blockchain" generally refers to a distributed database containing a register or list of records, called blocks, which are protected from tampering and revision by a unique cryptographic hash code.

Every time data is published on a blockchain database, data may be published as a new block. Each block may include a timestamp and a pointer to a previous block. Using a peer-to-peer network and a distributed timestamp server, a blockchain database may be managed as autonomous.

Then, a smart contract in the blockchain environment is generally a code stored in blockchain that can produce a change in state when it is addressed by a transaction. Blockchain smart contracts have been used to implement a variety of services such as, for example, decentralized crowdfunding or peer-to-peer energy trading.

However, blockchains and smart contracts often face significant scalability and cost issues and using them with a simple approach is not always cost-effective for many applications.

In fact, smart contracts that require the processing of continuous streams of data cannot be easily implemented in many blockchains, because they would require an unnecessary burden on the blockchain itself: the data processed by a blockchain smart contract is embedded in transactions and the actual transmission capacity in blockchain is often quite low, making it impossible to process all the incoming data.

In general, it can therefore be said that traditional blockchains and smart contracts do not scale well in terms of actual throughput. In other words, the number of transactions that a public blockchain can process in a predetermined amount of time is often low, making it unsuitable for many applications because it is insufficient.

Blockchain smart contracts would provide a suitable environment for the execution of logic for the so-called *Internet of Things* (IoT), i.e. the extension of the internet to the world of objects that acquire a digital identity so that they can communicate with other similar objects on the network, to be able to provide services to the users of these objects, but in which many devices, not controlled by any third party and therefore *trustless,* are necessary to perform complex interactions.

However, the low throughput and high costs associated with interacting with the blockchain make them unsuitable for this task.

Solutions have been proposed to improve the performance of distributed ledgers and to reduce the burden on the blockchain during the execution of smart contracts and the costs associated with it, trying not to compromise the properties guaranteed with the use of the blockchains themselves, but the proposed solutions have proven to be unsuitable for IoT, precisely because in that context it is necessary to execute this logic on very large amounts of data.

This is particularly felt in public blockchains, as they tend to have lower yields than private ones, which makes them unsuitable for running IoT smart contracts, especially when multiple similar smart contracts are deployed in the same supply chain.

Another problem dealt by IoT smart contracts is related to transaction fees: sending transactions to a blockchain smart contract, such as an Ethereum smart contract, costs fees that are generally proportional to the amount of data sent and the computational power required to execute the activated smart contract procedure.

To solve these problems, it is possible to offload the execution of the smart contract from the blockchain layer to another layer that will interact with the blockchain, but just on a few occasions.

Solutions that implement this approach are called off-chain solutions, or second-layer solutions. However, these solutions should provide security guarantees like those of traditional smart contracts while providing scalability improvements.

Therefore, in view of the aforementioned difficulties, there is an unsolved need to provide a decentralized computer-implemented process and a related platform that allow a fast, secure and cost-effective execution of smart contracts.

The technical problem underlying the present invention is to provide a solution to the problem mentioned in connection with the prior art.

The idea behind the present invention is to provide a process for the execution of smart contracts in which the management of the smart contracts themselves in the blockchain is offloaded to a second layer that can be identified as *the intermediate node layer*. The intermediate node layer is composed of devices (intermediate nodes) that are required to execute a smart contract that processes data from a third layer, called *sensor layer.*

Therefore, smart contract status updates can only be performed off-chain if intermediate nodes manage to reach a so-called consensus or unanimous agreement.

In the blockchain space, a consensus mechanism is a protocol that achieves a consensus on all nodes of a blockchain network distributed over a single dataset. This consensus, therefore, operates as a verification standard through which every blockchain transaction can be approved.

If a unanimous consensus cannot be reached, a dispute resolution protocol can be activated that allows you to prove in the blockchain context what the correct status is.

Then, the process for the execution of smart contracts can provide an any-trust guarantee, i.e. a single reliable intermediate node is sufficient to enforce the correct execution of the smart contract.

Finally, this problem is solved by a smart contract execution process as specified above, which is characterized in that it comprises the steps defined in annexed claim 1.

According to the present invention, the computer implemented management process is deployed through a platform architecture basically comprising three layers:

- a main blockchain layer wherein at least one on-chain smart contract is stored;
- a set of intermediate nodes forming a distributed intermediate node layer; and
- a plurality of sensor devices grouped in at least one sensor layer producing an input stream of sensor data to carry out a transition from a current state to a next state of a finite-state machine defined by said main blockchain layer.

In preferred embodiments of the invention, each sensor device owns a sensor public key to univocally and specifically identify themselves, and said sensor layer can be considered a trusted source of information since each of the sensor device is.

Then, the sensor devices of the sensor layer forward sensor messages, comprising a timestamp, to the intermediate nodes through a sensor flow made of a stream of sensor messages. In this step, all the sensor messages coming from the sensor device are merged in sensor flows of data streaming to all the intermediate nodes of the second layer of nodes.

The intermediate nodes, receiving said sensor flow of data, constitute a distributed layer of devices reading and executing the at least one on-chain smart contract, but they execute it in a decentralized manner by using each a local off-chain smart contract copy of the on-chain smart contract. Therefore, the intermediate nodes simulate said finite-state machine of the blockchain layer, and they output a plurality of constantly off-chain updated state changes in respective state channels.

Then, a leader intermediate node may be ranked among the intermediate node to carry out a comparison between the state change of the leader node and the state change of the other nodes.

Through this, when every intermediate node agrees on a certain state change, a related agreement certificate is issued by said leader intermediate node; the agreement certificate is sent to the other intermediate nodes.

Otherwise, when the intermediate nodes cannot reach an agreement on the state of a state channel at a certain step, a dispute start at said main blockchain layer, allowing the on-chain smart contract to carry out a state transition.

The present invention will be described below according to an example of a preferred embodiment thereof, provided for illustrative and not limiting purposes with reference to the attached drawings in which:

- Figure 1 schematically shows the procedure architecture for the execution of smart contracts according to the present invention;

- Figure 2 schematically shows windows and flows generated by sensors and received by intermediate nodes in a sensor layer, where sensors d and z generate $M_d$ and $M_z$ flows respectively that are received by intermediate nodes *i1* and *i2* which split them into windows and merge them, being able to miss some sensor messages, making their local merged windows different, for example, $w_1^1$ is different from $w_1^2$;

- Figure 3 schematically shows a sequence of messages illustrating a process of creating and deploying a consent certificate with one node acting as the primary node for a specified window;

- Figure 4 shows a diagram illustrating the initiation of a dispute in the procedure for the execution of smart contracts according to the present invention: two intermediate nodes, starting from the same state (*sn,en*), try to execute the consent certificate protocol to generate a valid consent certificate, but they have received different windows, which means they cannot create a valid consent certificate in time, forcing them to provide their local window to the on-chain smart contract;

- Figure 5 shows a class diagram representing a smart contract in intermediate nodes;

- Figure 6 shows a class diagram representing the type of messages that are processed by intermediate nodes;

- Figure 7 shows a graphical description of a pollution case study; and

- Figure 8 shows a graph illustrating, in a practical application case, an amount of gas used by an intermediate node for the execution of a smart contract with a different number of disputes: the Y-axis shows the amount of gas spent while the X-axis is the number of sensor messages processed, assuming that the sensor messages are grouped 5 by 5 in the windows of the intermediate nodes.

The present invention may be implemented in hardware and/or in software. Many components of the system, for example, signal processing modules or network interfaces etc., have not been shown, to ease the understanding of the present invention. However, one of ordinary skills in the art would appreciate that the overall platform necessarily includes these components.

A computing device is a hardware that includes at least one processor coupled to a memory. The processor may represent one or more processors (e.g., microprocessors), and the memory may represent random access memory (RAM) devices comprising a main storage of the hardware, as well as any supplemental levels of memory, e.g., cache memories, non-volatile or back-up memories (e.g., programmable or flash memories), read-only memories, etc. In addition, the memory may be considered to include memory storage physically located elsewhere in the hardware, e.g. any cache memory in the processor, as well as any storage capacity used as a virtual memory, e.g., as stored on a mass storage device.

The hardware of a computing device also typically receives several inputs and outputs for communicating information externally. For interface with a user, the hardware may include one or more user input devices (e.g., a keyboard, a mouse, a scanner, a microphone, a camera, etc.) and a display (e.g., a Liquid Crystal Display (LCD) panel). For additional storage, the hardware may also include one or more mass storage devices, e.g., a floppy or other removable disk drive, a hard disk drive, a Direct Access Storage Device (DASD), an optical drive (e.g., a Compact Disk (CD) drive, a Digital Versatile Disk (DVD) drive, etc.) and/or a tape drive, among others.

Furthermore, the hardware may include an interface to one or more networks (e.g., a local area network (LAN), a wide area network (WAN), a wireless network, and/or the Internet among others) to permit the communication of streaming content and information with other computers coupled to the networks. It should be appreciated that the hardware typically includes suitable analog and/or digital interfaces to communicate with each other.

In some embodiments of the present invention, the entire platform can be implemented and offered to the end-users and operators over the Internet, in a so-called cloud implementation. Then, no local installation of software or hardware would be needed, and the end-users and operators would be allowed access to the systems of the present invention directly over the Internet, using either a web browser or similar software on a client, which client could be a desktop, laptop, mobile device, and so on. This eliminates any need for custom software installation on the client side and increases the flexibility of delivery of the service (software-as-a-service) and increases user satisfaction and ease of use.

The hardware operates under the control of an operating system, and executes various computer software applications, components, program code, libraries, objects, modules, etc. to perform the methods, processes, and techniques described above.

In general, the method executed to implement the embodiments of the invention may be implemented as part of an operating system or a specific application, component, program, object, module or sequence of instructions referred to as "computer program(s)" or "program code(s)."

The computer programs typically comprise one or more instructions set at various times in various memory and storage devices in a computing device or computer, and that, when read and executed by one or more processors in the computer, cause the computer to perform operations necessary to execute elements involving the various aspects of the invention.

Moreover, while the invention has been described in the context of fully functioning computers and computer systems, those skilled in the art will appreciate that the various embodiments of the invention are capable of being distributed as a program product in a variety of forms, and that the invention applies equally regardless of the particular type of machine or computer-readable media used to actually effect the distribution.

Examples of computer-readable media include but are not limited to recordable type media such as volatile and non-volatile memory devices, floppy and other removable disks, hard disk drives, optical disks (e.g., Compact Disk Read-Only Memory (CD-ROMS), Digital Versatile Disks, (DVDs), etc.), and digital and analog communication media.

A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform.

Software components may invoke or be invoked by other software components through any of a wide variety of mechanisms. Invoked or invoking software components may comprise other custom-developed application software, operating system functionality (for example, device drivers, data storage (for example, file management) routines, other common routines and services, etc.), or third-party software components (for example, middleware, encryption, or other security software, database management software, file transfer or other network communication software, mathematical or statistical software, image processing software, and format translation software).

Software components associated with a particular solution or system may reside and be executed on a single platform or may be distributed across multiple platforms. The multiple platforms may be associated with more than one hardware vendor, underlying chip technology, or operating system. Furthermore, software components associated with a particular solution or system may be initially written in one or more programming languages but may invoke software components written in another programming language.

Computer-executable program instructions may be loaded onto a special-purpose computer or other machine, a processor, or other programmable data processing apparatus to produce a particular machine, such that execution of the instructions on the computer, processor, or other programmable data processing apparatus causes one or more functions or operations specified in the flow diagrams to be performed. These computer program instructions may also be stored in a computer-readable storage medium (CRSM) that upon execution may direct a computer or other programmable data processing apparatus to function in a particular manner, such that the instructions stored in the computer-readable storage medium produce an article of manufacture including instruction means that implement one or more functions or operations specified in the flow diagrams. The computer program instructions may also be loaded onto a computer or other programmable data processing apparatus to cause a series of operational elements or steps to be performed on the computer or other programmable apparatus to produce a computer-implemented process.

Although specific embodiments of the present invention will be described, one of ordinary skills in the art will recognize that numerous other modifications and alternative embodiments are within the scope of the disclosure. For example, while various illustrative implementations and architectures have been described in accordance with embodiments of the disclosure, one of ordinary skills in the art will appreciate that numerous other modifications to the illustrative implementations and architectures described herein are also within the scope of this disclosure.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any embodiment.

A computer system or platform includes a connection to a blockchain network, having one or more nodes, which can be in communication with one or more servers and/or client devices of the system or platform. A node may consist of a server, client device, or any other appropriate compute platform on a network.

The blockchain network can manage a distributed blockchain database containing the data recorded by the system or platform. This data can be kept as a distributed public record, which can be referred to as blocks, protected from tampering and revisions.

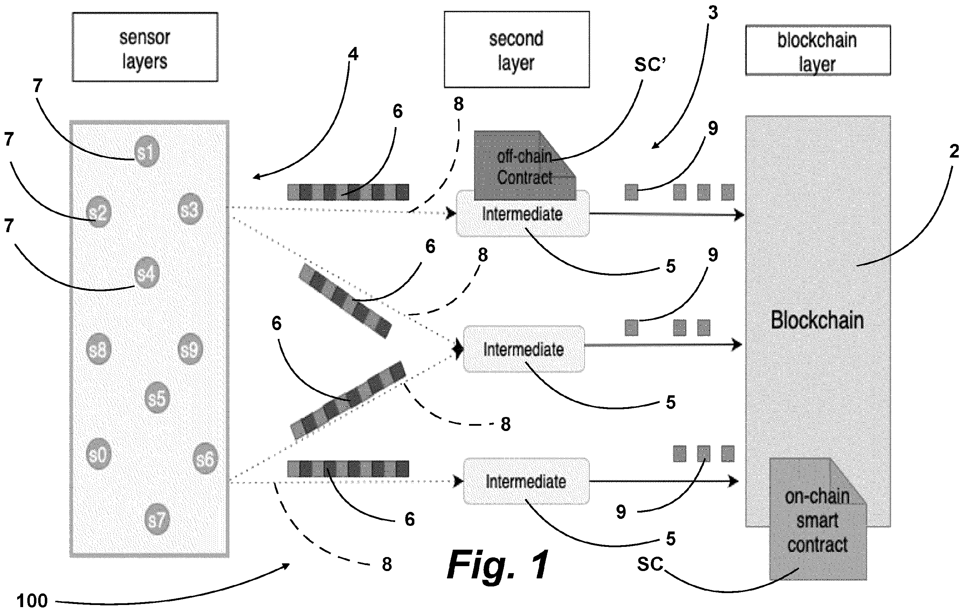

With reference to the figures, Figure 1 shows the architecture of the system 100 underlying the present computer-implemented process. This architecture has three layers: a main blockchain layer 2; a set of nodes forming a distributed intermediate node layer 3; and a series of IoT sensor devices $s_0$, $s_1$, $s_2$, ... $s_n$, grouped in sensor layers 4.

The blockchain layer 2 can contain one or more on-chain smart contracts SC. The use of the process and the platform requires a set of users to be tied to a smart contract SC. This specifies a finite-state machine or automation whose logical behavior is essentially centralized, which takes as input a stream of sensor data and performs a transition from its current state to the next.

This transition can cause an action to be performed using the on-chain smart contract SC, such as moving funds to the relevant blockchain.

Each user that has been involved in the smart contract definition can propose an intermediate node 5. Intermediate nodes 5 constitute a distributed layer of devices that read the on-chain smart contract SC and execute it in a decentralized manner.

In the following, the local copy of the on-chain smart contract SC is referred to as off-chain smart contract SC'. The basic idea is that the intermediate nodes 5 should simulate the state machine that is defined in the on-chain smart contract SC in a decentralized manner, and this decentralized execution defines a state channel.

More precisely, the secure protocol embodied by the platform 100 ensures that the local state of each honest intermediate node 5 will be the same as the logically centralized one.

The sensor layer 4 is composed by a set of sensors $s_0$, $s_1$, $s_2$, ... $s_n$ that forward sets of data or readings 6 embodying respective sensor messages transmitted to the intermediate nodes 5 through suitable connection lines 8, which can be of any suitable kind. Any reading 6 has a payload, possibly including headers and metadata.

Generally speaking, the sensors can be of any kind. A non-limitative and exemplary list of sensors can include: geophones, hydrophones, microphones, pickups, seismometers, sound locators, air flow meters, Hall effect sensors, temperature sensors, reservoir level sensors, pressure sensors, light sensors, oxygen sensors, radar sensors, speed sensors, carbon dioxide, monoxide or other gases sensors, chemoreceptors, electrochemical gas sensors, dew point analyzers, potentiometric sensors, smoke detectors, voltage detectors, environment, weather, moisture, humidity sensors, air pollution sensors, hygrometers, rain sensors, snow gauges, gas meters, Geiger counters, particle detectors, LIDARs, tilt sensors, photodetectors, biosensors, image sensors, sonars, Pitot tubes, etc.

The sensor layer 3 is then composed of physical devices 7 that are generally meant to be and act as sensors, assuming that the related device comprises a small amount of memory and limited CPU computation capabilities.

Such a device has connectivity and cryptographic capabilities, since it can send signed messages to the intermediate nodes 5.

In other words, each sensor device owns a public key *id* of the sensor, which is meant to be any kind of information that can univocally identify that specific sensor:

Sensors $s_0$, $s_1$, $s_2$, ... $s_n$ are assumed to be trusted, i.e. the origin of sensor messages can be always authenticated, and their integrity proved.

*Bizantine nodes,* and the related concept of *Bizantine fault tolerance,* have been described for the first time by Leslie Lamport et al. in [LESLIE LAMPORT, ROBERT SHOSTAK, and MARSHALL PEASE, The "byzantine general" problem, ACM Transactions on Programming Languages and Systems, 4(3):382-401, 1982]. This work described the problem of reaching a consensus on the state of a computer system in the presence of malicious actors that can send conflicting information to other parts of the system as a problem of Byzantine generals camped outside an enemy city having to reach an agreement on a common plan of action by communicating with one another by messenger. However, some of the generals may be traitors and send conflicting information, trying to prevent the loyal generals from reaching an agreement.

A solution to the problem of reaching an agreement among honest generals, each of which can communicate directly with one another, has been provided for 3m+1 generals, where m is the number of Byzantine generals (malicious generals) that the system can withstand when only oral messages are exchanged. The solution involving unforgeable signed messages -differently from the oral message solution can withstand any number of traitors.

Since sensors $s_0$, $s_1$, $s_2$, ... $s_n$ are assumed to be trusted, this assumption implies the following:

- Sensors $s_0$, $s_1$, $s_2$, ... $s_n$ do not have a byzantine behavior, meaning that a sensor does not send different readings 6 to different intermediate nodes 5.
- Sensors $s_0$, $s_1$, $s_2$, ... $s_n$ cannot be tampered with (i.e. the related devices 7 are tamper-proof devices).

Hence, the sensor layer 4 can be considered a trusted source of information. However, it is assumed that the connection between the sensors and the intermediate nodes is *unreliable,* meaning that sensor messages can be lost during transmission. In fact, the process is designed to provide *liveness* and *safety* even in the case of unreliable sensor message communication.

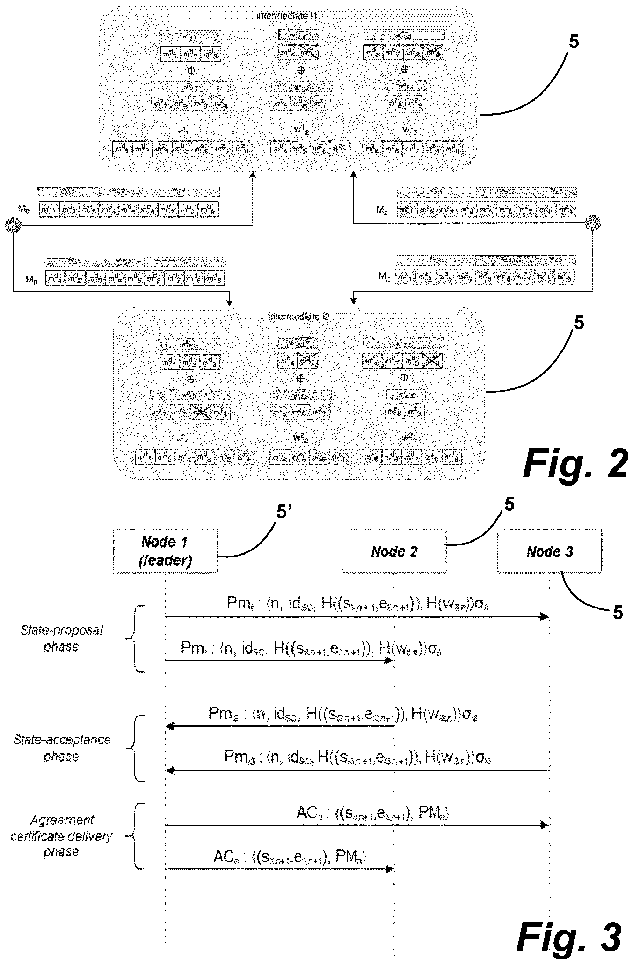

With reference to Figure 2, a message sent by a generic sensor d to an intermediate node 5 can be described as a tuple:

$$m_{d,q} = \langle id_d, q, data_{d,q}, t_q, type_d \rangle \sigma_d \qquad (1)$$

where:

- $q$ is a sequence number;

- $id_d$: is the public key of the sensor;

- $data_{d,q}$: is the data payload sent by the sensor;

- $t_q$: is the timestamp identifying when that sensor message was sent;

- $type_d$: represents the type of data transmitted by the sensor (e.g., humidity, temperature, etc..);

- $\sigma_d$: is the signature of sensor $d$.

A sensor generates a sensor flow that is a stream of sensor messages 6. $r_d$ are used to denote the sensor flow generated by $d$ and $m_{d,0}$, ..., $m_{d,q} \cdot m_{d,q+1}$, ... denotes the sensor messages in $r_d$. It is specified that each message contained in a stream of sensor messages $r_d$ is an element of $M_d$, with $M_d$ being the set of all possible messages coming from the sensor $d$. The sensor messages are broadcast to a set of intermediate nodes $\{i_1, ..., i_m\}$. These intermediate nodes use the flow $r_d$ to run all smart contracts SC that include the sensor d. It is worth mentioning that the timestamp $t_q$ of a message $m_{d,q}$ can also be used for ordering the sensor messages obtaining a flow that is $r_d$.

For the sake of presentation, $m_{d,t}$ is often used to denote the message $m_{d,q}$ that replace the sequence number $q$ with its timestamp $t$. Figure 2 shows the sensor flows $r_d$ and $r_z$ that are related to the sensors $d$ and $z$. These flows are sent to the intermediate nodes $i_1$ and $i_2$.

Flows coming from different sensors can be merged into a single one. Merged flows can be used by the intermediate nodes 5 for executing smart contracts SC.

Let $r_d$ and $r_z$ be two sensor flows that are related to the sensors d and z. A merged flow that is denoted with $r_d \oplus r_z$ is a sequence of sensor messages such that:

1 each message in the flows $r_d$ and $r_z$ appears exactly once in the merge $r_d \oplus r_z$;
2 a message $m_{dk}, t_k$ is in the merge $r_d \oplus r_z$ iff $m_{dk}, t_k$ is either in $r_d$ or $r_z$;
3 if $m_{dj}, t_j$ and $m_{dk}, t_k$ are two messages in $r_d \oplus r_z$ and $t_j < t_k$ then $m_{dj}, t_j$ appears before $m_{dk}, t_k$ in the merge;
4 if $m_{dj}, t_j$ and $m_{dk}, t_k$ are two messages $r_d \oplus r_z$ with $t_j = t_k$ and $id_{dj} < id_{dk}$ then $m_{dj}, t_j$ appears before $m_{dk}, t_k$ in the merge $r_d \oplus r_z$;

Generalizing, the merge operation produces a set of sensor flows. Supposing that a set of sensors $D$ and that $d_1$, $d_2$, ... $d_h$ are elements in $D$, then it can be stated:

$$r_D = \bigoplus_{k=1}^{h} r_{d_k} \ (d_k \in D)$$

denoting the merge of all sensor flows. "r" can be used instead of "$r_D$". when the set of sensors $D$ is clear from the context.

It is defined $R_d$ as the set of all possible flows that can be generated by a sensor $d$. Let $M_d$ be the set of all sensor messages that can be generated by sensor $d$, $R_d$ can be defined as follows:

$$R_d = M_d^* \qquad (2)$$

where * is the Kleene star operator.

From this definition, $R_D$, which is defined as the set of all possible merged sensor flows that can be generated by the sensors in a set $D = \{d_1, d_2 ... d_h\}$:

$$R_D = \{\bigoplus_{i=1}^{|D|} tr_i : tr_i \in R_{D,n}\} \qquad (3)$$

As it will be appreciated in the following, smart contracts SC are defined over finite substrings 9 of flows. $R_{D,n}$ indicates the set of all possible substrings 9 of the flows that can be generated by the intermediate nodes 5 in $D$ with a maximum length $n$.

It is assumed that a set $U$ of users $\{u_1, u_2, ... u_m\}$, are interested in running a state channel whose state transitions depend on the messages on the flows produced by a set of sensors $D = \{d_1, d_2, ... d_h\}$. The behavior of the state channel can be described by a state machine that, given a certain input, returns a new state which, in the present case, represents both the amount of money owned by every user in $U$, and a numeric value that is indicated as *state variable*. The amount of cryptocurrency of the channel owned by every user in $U$ is called *redistribution*. A redistribution $e_U$ to a set of users $U = \{u_1, u_2, ... u_m\}$ can be described as an m-tuple:

$$e_U = \langle (u_1, a_1), (u_2, a_2), ... (u_m, a_m) \rangle \qquad (4)$$

where each element $a_i$ is a positive integer representing the amount of cryptocurrency owned by user $u_i$.

In order to instantiate a state channel, it is necessary to deploy first a smart contract SC on a blockchain that specifies both the state machine, as well as the information about the windows to be used as input to the transition function of the state machine, and the devices responsible of physically running the state channel.

A smart contract SC can be described as a tuple:

$$SC = \langle I, D, K, T_0, T_w, N_w, SM \rangle \qquad (5)$$

where:

- $I$: is a set of intermediate nodes $I = \{i_1, i_2, ... i_n\}$, responsible of running the state channel;

- $D$: is a set of sensors $s_0, s_1, s_2, ... s_n$, hereinafter also indicated as $d_1, d_2, ... d_h$ to avoid confusion with the notation of the states;

- $K$: is a positive integer representing the stake, which is the amount of cryptocurrency locked used to give an incentive to intermediate nodes to behave honestly;

- $T_0$: is the timestamp indicating the time when the state channel execution starts;

- $T_w$: is the window duration: windows of sensor messages are the input of the transition function;

- $N_w$: is the number of windows the state channel processes;

- $SM$: is the state machine specifying the behavior of the state channel.

The state machine $SM$ can also be described as a tuple

$$SM = \langle (S \times E), (s_0, e_0), R_{D,n}, F \rangle \qquad (5bis)$$

where:

- $S \times E$ is a set of states, where $S$ is a set of values and $E$ is a set of redistributions;

- $(s_0, e_0)$ is the *initial state* of the state channel, with $s_0 \in S$ and $e_0 \in E$;

- $R_{D,n}$ is the input alphabet, i.e. the set of all possible merged sensor flows of sensors in $D$ with maximum length $n$;

- *F:* it is the *transition function,* mapping elements in $S \times E \times R_{D,n}$ to elements in $S \times E$.

The state channel execution specified by the smart contract SC is performed by the intermediate nodes 5 in the set of intermediate nodes I: these devices should be receiving messages from the sensors in the set of sensors D that they will use to assemble windows of sensor messages to be used as the input of the state machine transition function to make the state channel transition from one state to another.

A window $w(r_d, T_0, T_w, n)$ is the *n*-th substring of a sensor flow $r_d$ where $T_0$ and $T_w$ are the times included in the state machine definition. $w(r_d, T_0, T_w, n)$ contains all messages $m_{d,t}$ such that $T_0 + n \times T_w \leq t < T_0 + (n + 1) \times T_w$.

For the sake of clarity, it is indicated a window of sensor messages with $w_n$ when $r_d$, $T_0$ and $T_w$ are clear from the context. Ideally, the state channel execution specified by a smart contract starts at time $T_0$, waiting until time $T_0+T_w$ is reached in order to allow intermediate nodes to be able to assemble the first window $w(r_d, T_0, T_w, 0)$ which will be used by them to execute a protocol that will result in the state channel transitioning from a state $(s_0, e_0)$ to $(s_1, e_1)$ with $(s_1, e_1) = F((s_0, e_0), w(r_d, T_0, T_w, 0))$.

As it will be apparent in the following, the intermediate nodes simulate a state change $(s_1, e_1)$ when a proof of unanimous agreement of intermediate nodes could be generated for it or when the on-chain smart contract accepts the state $(s_1, e_1)$ after an on-chain dispute has been settled. Once the state channel has transitioned to a state $(s_1, e_1)$, then another $T_w$ period is waited in order to transition to the following state. This is done a number of times equal to $N_w$.

Since state channels update their states according to the messages produced by a set of referenced sensors $s_0$, $s_1$, $s_2$, ... $s_n$, the intermediate nodes 5 running a state channel are required to be able to receive messages from the referenced sensors $s_0$, $s_1$, $s_2$, ... $s_n$.

It is worth recalling that the connection between the sensor layer and the intermediate node layer is not assumed to be reliable, meaning that messages may be lost during transmission from a sensor to an intermediate node. Because of this, an intermediate node $i_k$ may have received only a portion of the messages in the sensor flow $r_d$.

It is indicated with $r_{d,ik}$ the flow of sensor messages coming from sensor $d$ that have been received by node $i_k$, and with $r_{D,ik}$ the merged flow of sensor flows produced by sensors in $D$ that has been observed by node $i_k$; we call this the *intermediate node flow* of $i_k$.

However, even though any intermediate node may only have partial knowledge of the flow generated by the sensors, the process will ensure that the transition from a state $(s_n, e_n)$ to $(s_{n+1}, e_{n+1})$ will be the result of the application of the transition function to the window of data of the flow $r_D$, that is

$$(s_{n+1}, e_{n+1}) = F((s_n, e_n), w_n))$$

assuming that every message in $w_n$ has been received by at least one honest intermediate node. However, even this assumption is quite strong and may not hold in many situations. It may happen, for instance, that some sensor messages are never received by any intermediate node, making it impossible for them to perform a state transition that depends on $r_D$.

In these situations, the best solution is to guarantee that the state channel transitions to a new state by applying the transition function to the merge of the local windows observed by the intermediate nodes. This means that if a message in $r_D$ that should be in $w(r_D, T_0, T_w, n)$ is not received by any intermediate node, then the next state of the state channel $(s_{n+1}, e_{n+1})$ will be guaranteed to be equal to $F((s_n, e_n), \omega_n)$, with $\omega_n$ being the merge of all the local windows that the intermediate nodes used to transition to a new state:

$$\omega_n = \{\bigoplus_{k=1}^{|I|} w_{D,i_k} : i_k \in I\} \qquad (6)$$

$\omega_n$ can be defined as $w(r_{D,I}, T_0, T_w, n)$ by defining $r_{D,I}$ as the merge of the local flows of the intermediate nodes in $I$ used to transition to a new state:

$$r_{D,I} = \{\bigoplus_{k=1}^{|I|} r_{D,i_k} : i_k \in I\} \qquad (7)$$

Intermediate nodes will ensure that the state channel transition to a reasonable state by running a protocol among them aimed at proving a certain state has been agreed by every honest intermediate node, setting out a process protocol of the present invention, which is divided into two subprotocols, namely the *Agreement certificate protocol* and the *Dispute*

*resolution protocol.*

The agreement certificate protocol (Figure 3) is the protocol run by the intermediate nodes 5 to generate a certificate proving that every intermediate node 5 agrees on a certain state $(s_n, e_n)$: this proof is indicated as an *agreement certificate* AC, allowing state updates to be performed off-chain without interacting with the blockchain layer 2: as long as an agreement certificate AC exists for a certain window, intermediate nodes 5 can be sure that, along the off-chain state outcome, they reached an agreement on what can be enforced on-chain and that the related redistribution of funds can be performed.

In order to issue such an agreement certificate AC, a leader node 5' is selected each time the local time reaches $T_0 + (T_w \cdot n) + \delta_w$, with $\delta_w$ being the maximum tolerable delay. Leader node selection can be done in a round robin manner, without any exchange of messages. The leader node $i_l$ thus selected will then propose a new state channel state by applying the state machine transition function to the previous state previously agreed and to its local window $w_{n,il}$ thus obtaining:

$$(s_{n+1,il}e_{n+1,il}) = F((s_{n,il}e_{n,il}), w_{n,il}) \qquad (8)$$

This state is referred as the leader node *proposed state* at time *n*.

After the leader intermediate node 5' has completed this stage, it can propose its locally computed state to the other intermediate nodes 5 by assembling a message with the following format:

$$pm_l = \langle n, id_{SC}, H(F((s_{n,il}e_{n,il}), w_{n,il})), H(w_{n,il}) \rangle_{\sigma il} \qquad (9)$$

where:

- $H(F((s_{n,il}e_{n,il}), w_{n,il}))$ is the hash of the state computed by node $i_l$ on its n-th local window;
- $H(w_{n,il})$ is the hash of the n-th local window of $i_l$;
- $n$ is the number of the window;
- $id_{SC}$ is a reference to the on-chain smart contract SC;
- $\sigma_{il}$ is the signature applied by the leader node 5'.

this kind of message is referred as a protocol message PM.

The leader protocol message PM is broadcasted to every other intermediate node 5 referenced by the on-chain smart contract SC, initiating thus the *state proposal phase* of the protocol (Figure 3). Every intermediate node $i_k$ will perform the following checks upon receiving such a message:

- Check whether the hash of the local state matches its own computed state for smart contract SC at window number *n:*

$$H(F((s_{n,il}e_{n,il}), w_{n,il})) = H(F((s_{n,ik}e_{n,il}), w_{n,ik})).$$

- Check whether the hash of the window used to compute the new state is equal to the hash of its local window: $H(w_{n,il}) = H(w_{n,ik})$.

If the checks are passed, then each intermediate nodes $i_k$ will send back its own protocol message to $i_l$ containing the same values sent by $i_l$ but with the signature of $i_k$: this protocol phase is referred as the *state acceptance phase*

Once the leader node 5' has received the protocol messages of all the other intermediate nodes 5, it can create the agreement certificate AC.

An agreement certificate $AC_n$, proving a unanimous agreement has been reached by every intermediate node 5, can be described as follows:

$$AC_n = \langle (s_{n+1,il}, e_{n+1,il}), PM_n \rangle \qquad (10)$$

where $PM_n$ is a set of protocol messages such that:

- Every protocol message in $PM_n$ have the same values for every field, except for the signature;
- Each protocol message in $PM_n$ is signed by a different intermediate node;
- Every intermediate node in $I$ has signed exactly one protocol message in $PM_n$;
- for every protocol message

$pm_{ik} = \langle H(F((s_{n,ik}e_{n,ik}),w_{n,ik})),H(w_{n,ik}),n,a\rangle_{\sigma ik}$ in $PM_n$ it is true that: $H(F((s_{n,ik}e_{n,ik}),w_{n,ik})) = H(S_{n+1,il},e_{n+1,il})$;

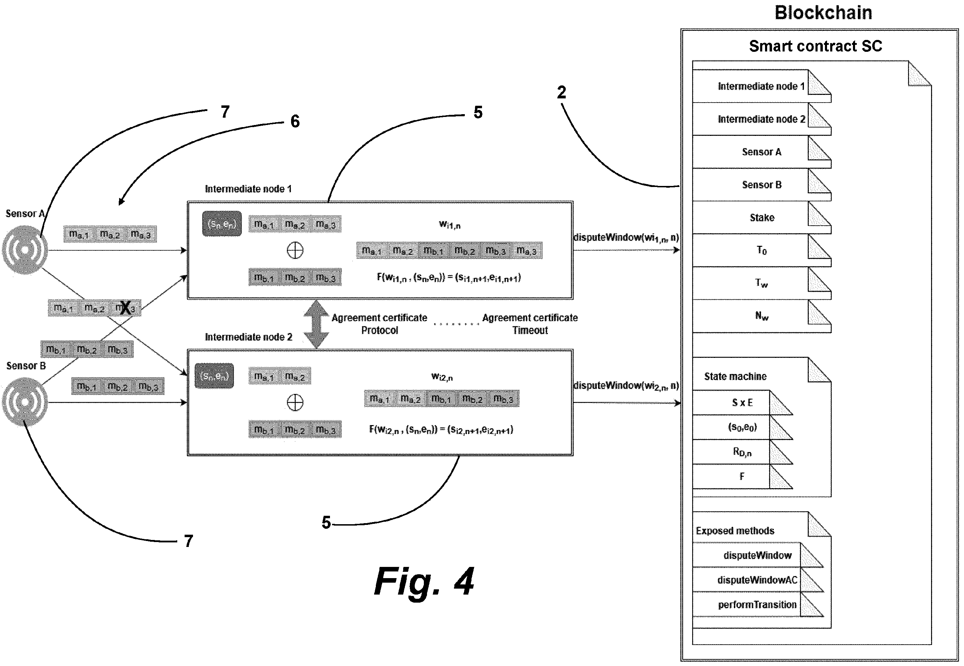

Once the agreement certificate AC has been assembled by the leader node 5', this node transmits the agreement certificate AC to all the other intermediate nodes 5: this is the last phase of the agreement certificate protocol, and it is referred as the *agreement certificate delivery phase* (see figure 4).

Now, a dispute resolution mechanism had to be devised in order to ensure the *liveness* and *safety* of the state channel even when intermediate nodes do not cooperate. *Liveness* informally states that "good" things will eventually happen; while *safety* means that bad things do not happen.

In this context, liveness states that the state channel is ensured to progress as long as there is at least one honest and working intermediate node in the system; while with *safety* it is meant that any state reached by the state channel is either unanimously agreed by intermediate nodes, or is the product of the application of the transition function to the previous state and the merge of the local windows that the intermediate nodes use in order to move to the next state.

When intermediate nodes 5 cannot reach an agreement on the state of the state channel at a certain step *n,* a dispute starts (Figure 4).

An intermediate node 5 starts a dispute either when it could not receive a valid agreement certificate AC for a certain window before a timeout expires, or when it detects that another intermediate node 5 has started a dispute on-chain.

When one of these situations occur, the intermediate node 5 cannot prove that the last performed state transition is the same agreed by other intermediate nodes 5, nor that it has been performed with a window that contains the sensor messages received by other intermediate nodes 5. A solution for that is to perform the state transition on-chain and lead the smart contract transition to a new state.

Intermediate nodes can in fact send to the smart contract SC their local windows and the smart contract SC would be able to merge these windows to apply the transition function to it. However, the *transition function* also requires to know what is the previously agreed state. The agreement certificate is the piece of data that allows any intermediate node 5 to prove what is the state from which we are performing the transition. This is why it is necessary to generate an agreement certificate for every reached state $(s_n,e_n)$, since it enables nodes to solve possible disputes occurring in the future. When an agreement certificate for a state cannot be generated, it is thus necessary to solve the dispute on-chain.

To solve the dispute, any intermediate node $i_k$ waits an amount of time before communicating their local window, and possibly the agreement certificate for the previous state, to the smart contract on-chain.

Two methods are provided to solve such a dispute, the dispute window method and the dispute Agreement Certificate method, shortly indicated as AC method.

The dispute window method, is the method allowing any intermediate node $i_k$ to solve disputes by providing its own local window $w_{n,ik}$, allowing the smart contract SC to transition to a state $(s_{n+1},e_{n+1})$.

An intermediate node 5 can call the dispute Window method only if the following conditions apply:

- The blockchain time reached $T_0 + (T_W \cdot n)$ and a dispute period has not ended.
- The smart contract SC knows the starting state $(s_n, e_n)$ that can be used as an argument of the *state transition function.* This is the case if the method is called for the first window of the smart contract, in this situation the *state* to be passed to the *state transition function* is $(s_0,e_0)$, which is the initial state. It is worth mentioning that the smart contract SC at time *n* + 1 knows the state $(s_n, e_n)$ from which he should apply the transition function if it previously performed on-chain the state transition from $(s_{n-1},e_{n-1})$ to $(s_n,e_n)$.

If these conditions are met, a node $i_k$ calls this method providing its local window of data $w_{n,ik}$ and the index *n*. The local window thus provided will be used by the smart contract to compute the merge of the local windows of the intermediate nodes $(\omega_n)$: the smart contract will in fact wait a dispute period that is increased each time a window containing more messages than the previous ones is proposed on-chain.

This is done to allow other intermediate nodes to provide their local window, and then, after the dispute period has ended, it is ready to perform the state transition on-chain. Once the dispute period has ended, any intermediate node can make the smart contract perform a last state transition ($n = N_W - 1$), it will unlock the redistribution, giving the locked funds to the intermediate nodes according to $e_{Nw}$.

The algorithm providing the dispute window method is written down as follows:

### **Algorithm 4.1** Dispute with window method

```
\\ ωₙ is a local variable stored by the Dany smart contract
   that
\\ stores the merge of all the windows proposed at time n
\\ disputeBeginₙ is a flag that specifies whether a dispute has
   been raised for the n−th window

function disputeWindow(wₙ, n){
    require(isDisputeTime(tx.timestamp, n))
    require( n ≥ 0)
    require( n < Nw)
    require(windowContainsNewValidMessages(wₙ, n))
    ωₙ ← ωₙ ⊕ wₙ
    disputeBeginₙ ← TRUE
    increaseDisputeTime(n)
}
```

As for the dispute agreement certificate method, the achieved scalability improvements lie in the fact that state transitions can be performed mostly off-chain, without the need to tell the blockchain anything. For this reason, it is not always the case that the on-chain smart contract SC knows what the state is unanimously agreed off-chain. Whenever a dispute among intermediate nodes occurs for a state $(s_n, e_n)$, and the smart contract does not know the previous state $(s_{n-1}, e_{n-1})$, every disputing node should call an AC method requiring three arguments: the local window of the intermediate node $w_{n,ik}$; the index $n$; and the agreement certificate $AC_{n-1}$, that allows the smart contract to know what is the previously unanimous agreed state reached off-chain. The AC method performs the following checks upon being called:

- check whether $AC_{n-1}$ is a valid agreement certificate for the state $(s_{n-1}, e_{n-1})$;
- check whether the window provided contains valid sensor messages that were not provided to the blockchain before;
- check that the dispute period for the window has not ended.

If the checks pass, the smart contract SC will store the agreement certificate AC and will wait a dispute period to allow other intermediate nodes to provide their own local window.

The algorithm providing the dispute agreement certificate method is written down as follows:

### **Algorithm 4.2** Dispute with window and previous agreement certificate method (AC method)

```
function disputeWindowAC(
    ACₙ₋₁, n)
    {
    require( n ≥ 0)
    require( n < Nw)
    require(windowContainsNewValidMessages(wₙ, n))
    require(isDisputeTime(tx.timestamp, n))
    require(AgreementCertificateIsCorrect(ACₙ₋₁, n−1))
    disputeBeginₙ ← TRUE
    this.ACₙ₋₁ ← ACₙ₋₁ //the stored agreement certificate at index
        n−1 is set to be equal to the one provided as argument
    ωₙ ← ωₙ ⊕ wₙ
}
```

Once the dispute period has ended, similarly to what happens when the intermediate nodes call the dispute Window method, a further transition method has to be called, allowing the smart contract SC to perform the state transition on-chain.

The algorithm providing the transition method is written down as follows:

## Algorithm 4.3   Pseudocode of the Perform Transition method exposed by te smart contract SC

```
function performTransition(n){
    require(disputeTimeIsOver(n))
    require(disputeBegin_n = TRUE)

    (s_{n+1}, e_{n+1}) ← F((s_n, e_n), ω_n)

    if( n = (N_w − 1) ){
        unlockRedistribution(e_n)
    }
}
```

**Proofs**

In the following, a theorem is designed to define a protocol stating that the honest intermediate nodes will eventually always agree on the same n-th state of the state channel and that this state is the result of the application of the transition function to the previous state and to the merge of the windows processed by the intermediate nodes, meaning that $(s_n, e_n) = F((S_{n-1}, e_{n-1}), \omega_{n-1})$

The theorem will be proven to hold true both when disputes occur and when they do not occur.

**Theorem 1** Let A be a state channel defined by a smart contract SC

SC = $\langle$I,D,K,T$_0$,T$_w$,N$_w$,SM$\rangle$, with I being a non-empty set of intermediate nodes where I = {i$_1$, ...,i$_{|I|}$}. Let W, be the set of windows that are used by the intermediates nodes to run the n-th run of the protocol. That is

$W_n$ = {w$_{i1,n}$,w$_{i2,n}$, ...,w$_{i|I|}$,n}

Supposing that $\omega_0$, ...,$\omega_h$, ...,$\omega_n$} are the sequence of merged windows that are used by the platform at each run of the protocol where each $\omega_h = \bigoplus_{j=1}^{|\breve{I}|} w_{i_j,h} \in W_h$ .

It can be proved that at step n (0 < n < N$_w$) of the protocol execution all honest intermediate nodes will reach the same state ($s_n$, $e_n$) that is the state reached by the state machine SM after parsing the merged windows $\omega_0,\omega_1, ...,\omega_n$. This parsing can be described in the following way:

$$\omega_h = \bigoplus_{j=1}^{|\breve{I}|} w_{i_j,h} \in W_h.$$

$$(s_n, e_n) = \begin{cases} (s_0, e_0) & : n = 0 \\ F((s_{n-1}, e_{n-1}), \omega_{n-1}) & : 0 < n < N_w \end{cases}$$

where F is the transition function of the state machine SM.

The theorem can be proved by induction on the number *n* of the protocol runs.

At run *n* = 0 all honest nodes will be in the same state ($s_0$, $e_0$) that is the initial state of SM when no window has been parsed.

Suppose that at the n-th protocol run (with 0 < *n* < N$_w$ - 1) all honest intermediate nodes will have the same state ($s_n$, $e_n$) and

$$(s_n, e_n) = \begin{cases} (s_0, e_0) & : n = 0 \\ F((s_{n-1}, e_{n-1}), \omega_{n-1}) & : 0 < n < N_w \end{cases}$$

It must be proved that after one run of the protocol (i.e., *n* + 1) all the honest nodes will reach the same state ($s_{n+1}$, $e_{n+1}$) that is equal to $F((s_n, e_n), \omega_n)$. This proof can be done by considering the following two complementary set of assumptions:

1. **Case A.** (i) all intermediate nodes are running (i.e., there are no node failures, and the network connection is always working), and (ii) all nodes are honest (i.e., they are correctly executing the protocol), and (iii) all intermediate nodes use the same window for the computation.

2. **Case B.** (i) at least an intermediate node failed (a fail-stop model is assumed) or a node connection link is not working, or (ii) at least an intermediate node is not sending valid protocol messages. A message is invalid in the following cases: (1) the message is wrongly formatted or unexpected (see protocol messages of Figure 4.3); (2) two different nodes propose different SM states; (3) two different nodes propose two different message windows;

**Case (A).** Without loss of generality, it is assumed that the intermediate node $k$ is playing the leader role at run $n$ of the protocol. The leader node will use its $n$-th window $w_{ik},n$ in order to calculate the new SM state $(s_{n+1},e_{n+1})$ that is $(s_{n+1},e_{n+1}) = F((s_n,e_n),w_{ik},n)$. This will allow the leader $k$ to assemble the protocol message of Eq. 4.9 that is:

$$pm_k = \langle n, id_{SC}, H(F((s_n,e_n),w_{ik},n)), H(w_{ik},n) \rangle_{\sigma i} l \qquad (11)$$

The leader node will send $pm_k$ to all other intermediate nodes. Since each receiving node $i_j$ is honest (i.e., assumption **Case (A).(ii))** and performs the same computation (i.e., assumption **Case (A).(iii)),** it will send back the same computation $H(F((s_n,e_n),w_{ij},n))$ and the same window hash $H(w_{ij},n)$ (state-acceptance phase).

This means that all nodes use the same window that is $w_{ij},n = w_{ih},n$ for each $i_j, i_h \in I$. It is worth mentioning that having the same window $w_{ij},n$ for all the nodes does not necessary mean that all sensor messages are correctly received. In fact, all intermediate nodes may lose the same sensor message but still having the same window. The leader will correctly receive all messages, will change its state to $(s_{n+1},e_{n+1})$ and will be able to send back the Agreement Certificate AC.

All nodes will correctly receive the agreement certificate and will move their state to state $(s_{n+1},e_{n+1})$ (since they are all honest). It is worth noticing that in this case the blockchain is not involved. Effectively, there are no disputes. We now need to prove that the new state $(s_{n+1},e_{n+1}) = F((s_n,e_n),w_{ik},n)$ agreed by the intermediate nodes is equal to

$$F((s_n,e_n),\omega_n) \qquad (12)$$

This can be easily proved with the use of assumption (A iii) stating that all intermediate nodes use the same window for the computation, meaning that the merge of all intermediate node windows $\omega_n$ is the same as every intermediate node window

$$w_{i_j,n} = \bigoplus_{i=1}^{|I|} w_{i,n} = \omega_n \qquad (13)$$

since all sensor windows are the same that is $w_{ij},n = w_{ih},n$ for each $i_j, i_h \in I$. This means that all intermediate nodes will move to the state $(s_{n+1}, e_{n+1})$ such that:

$$(s_{n+1}, e_{n+1}) = \begin{cases} (s_0, e_0) & : n = 0 \\ F((s_n, e_n), \omega_n) & : 0 < n < N_w \end{cases}$$

**Case (B).** First of all, it is worth mentioning that the honest nodes will drop all invalid messages. For instance, an intermediate node that sends all invalid messages is treated as a failing node that sends no messages. For case (B), it is proved that any dishonest behavior will always lead to a dispute. Then it can be proved that a dispute always synchronizes honest nodes to the same state $(s_{n+1},e_{n+1})$. This state is equal to $F((s_n,e_n),\omega_n)$.

Without loss of generality, it is first assumed that the leader node is honest. The leader node will use its $n$-th window $w_{ik},n$ in order to calculate the new SM state

$(s_{n+1},e_{n+1})$ that is $(s_{n+1},e_{n+1}) = F((s_n,e_n),w_{ik},n)$. This will allow the leader $k$ to assemble the protocol message of Equation (9) above, that is:

$$pm_k = \langle n, id_{SC}, H(F((s_{n+1}, e_{n+1}), w_{ik}, n)), H(w_{ik}, n)\rangle_{\sigma i} l \qquad (14)$$

The leader node will send $pm_k$ to all other intermediate nodes and it will wait for their reply. By assumption, one of the nodes is not running a valid protocol. This means that the leader will not receive a valid reply from all the intermediate nodes and the agreement certificate will not be generated within the allowed time, or a dispute will be issued by an intermediate node (although this is not necessary).

In case the timeout expires with the leader node not being able to generate a valid Agreement certificate yet, then the leader node starts a dispute on-chain. If the honest node was able to generate and send a valid AC, the dishonest node can still attack the protocol by issuing a dispute message. More in general, a dispute message can be issued at any step of the protocol. On-chain dispute messages will be always monitored by an honest node that will correctly detect it and will take part to the dispute protocol resolution.

When a non-leader node $j$ is honest and running, it will wait for the $pm_k$ message from the leader node. When no valid message is received, the node will start a dispute. When the node receives a valid message that is $H(w_{ij}, n) = H(w_{ik}, n)$ and $H(F((s_{n+1}, e_{n+1}), w_{ij}, n))$ is equal to $H(F((s_{n+1}, e_{n+1}), w_{ik}, n))$ then the non-leader node will reply by signing the message to its leader.

In this case, the node will wait for a valid agreement certificate. When this message is not received a dispute will start. After the honest non-leader nodes receive a valid AC, the dishonest node can still attack the protocol by issuing a dispute message.

Therefore, a dishonest node will always trigger a dispute. At this point it is proved that a dispute always synchronizes honest nodes in a finite time to the same state $(s_{n+1}, e_{n+1})$ and that this state is equal to $F((s_n, e_n), \omega_n))$. To prove this assumption, the dispute resolution protocol should be considered.

First, it is proved that disputes are always settled in a finite time as long as at least one intermediate node is honest. This is the case, because each time an intermediate node calls one of the dispute methods exposed by the smart contract SC on-chain, namely the dispute Window method and AC method, while providing new valid messages as arguments, then the dispute period is increased.

However, since the number of sensor messages is finite, it means that the dispute methods cannot be called indefinitely meaning that the dispute period is also finite, and, as long as there is an honest intermediate node, the transition method will be called, allowing any honest intermediate node to synchronize on the same state.

Then, it is requested to prove that the state $(s_{n+1}, e_{n+1})$ intermediate nodes synchronized to is equal to $F((s_n, e_n), \omega_n)$.

This is evident from the dispute resolution methods pseudocode. In fact, the shown methods will collect all valid sensor messages provided by the intermediate nodes and will perform a state transition towards a new state by applying the state transition function to the previous state and to the merge of all the windows that have been provided, but this merge is actually equal to $\omega_n$ since all intermediate nodes are required to provide their local windows: if any intermediate node does not provide their window we consider their local window to be empty, even if they physically received some sensor messages.

**Corollary** 1 Let A be a state channel defined by a smart contract SC

SC = $\langle I, D, K, T_0, T_w, N_w, SM\rangle$. Let BC be the set of states of A that are stored by the blockchain on which an agreement has been reached through the on-chain dispute resolution protocol

$$BC = \{(s_k, e_k), \ldots, (s_j, e_j)\} \qquad (15)$$

Let $ACSET_{ik} = \{AC_x, \ldots, AC_y\}$ be the set of agreement certificates AC either received, or generated, by an honest node $i_k \in I$ for the state channel a.

$$ACSET_{ik} = \{AC_x, \ldots, AC_y\} \qquad (16)$$

Let $S_{ik}$ be the set of state channel states reached by an honest node $i_k$ either by agreement or by dispute resolution

$$S_{ik} = \{(s_0, e_0), \ldots, (s_n, e_n)\} \qquad (17)$$

Then, it is possible for $i_k$ to prove that any state in $S_{ik}$ is a state reached by the state channel, meaning that for every

$(s_i, ei)$ in $S_{ik}$ either there exists an agreement certificate $AC_i$ in $ACSET_{ik}$ proving it, or $(s_i, e_i)$ has been adjudicated in the blockchain, meaning that $(s_i, e_i) \in BC$. At the end of the execution of the state channel, any honest intermediate node is able to prove what was any n-th state of the state channel $(s_n, e_n)$.

This corollary derives from the previous theorem, where it is proved that an agreement among honest intermediate nodes for any state $(s_n, e_n)$ is always reached in a finite time, meaning that at the end of the execution of the state channel, an honest intermediate node $i_k$ will have reached the states

$$S_{ik} = \{(s_0, e_0), \ldots, (s_n, e_n)\}$$

Agreement can be reached in two different ways, either by agreement certificate propagation, or by disputing on-chain.

This means that for every $(s_n, e_n)$ there exists at least one agreement certificate proving it, or the state has been adjudicated on-chain.

In case the agreement has been reached on-chain, then $(s_n, e_n) \in BC$, In case agreement has not been reached on-chain and $i_k$ is honest, then it means that there exist an agreement certificate AC and that $i_k$ has either received it, or assembled it.

This is because the above protocol specifies that once an agreement certificate AC is not received within a predetermined period of time, then any honest intermediate node should start a dispute on-chain. In this case, $i_k$ can prove what is the n-th state of the state channel by providing the agreement certificate $AC_n$ in $ACSET_{ik}$, since it contains a proof that unanimous agreement has been reached among intermediate nodes.

**Incentivization**

The security of the process according to the invention comes from the fact that any party involved in the execution of the smart contract can enforce the system to behave correctly. The scalability enhancements, instead, come from requiring parties to interact with the blockchain only on a few occasions, such as when money should be transferred from the smart contract to a certain recipient or when there is a dispute.

Solving disputes on the blockchain, however, is computationally expensive, and it is also monetary expensive if the blockchain on which the smart contract is deployed makes users pay for fees whose cost is proportional to the amount of computation requested. Ideally, to prevent nodes from purposefully communicating wrong information to cheat the system, a penalty should be given to the wrongdoers when they are proven to be malicious.

However, it is not possible to know whether a node is communicating wrong information because it is malicious or because it hasn't received certain messages. For this reason, a different incentive system has been devised. The incentive system aims to provide the platform with the following properties:

- Intermediate nodes do not have an incentive in proposing wrong data, i.e incomplete windows, to the blockchain.
- Intermediate nodes do not have an incentive in waiting for other parties to solve the dispute for them (lazy nodes are not incentivized).

The incentive system consists in requiring intermediate nodes to lock a certain amount of money in the smart contract at the moment of deployment (stake) that will be used to incentivize their correct behavior.

The staked money is then used to repay the transaction costs borne by the disputers when they call the smart contract methods for solving disputes.

Each time a smart contract method is called successfully by an intermediate node, the smart contract equally detracts the staked money from every registered intermediate node on the contract.

Supposing intermediate nodes *A, B* and *C* have staked five tokens each in a smart contract SC and supposing also that a transaction costs three tokens of fees, if node *A* calls a dispute method, then he is refunded of the three tokens required to pay for transaction fees, but the money is equally detracted from everyone's stake, meaning that, after executing the method, every party has now four tokens each.

For this reason, a party is not encouraged to wait other parties to start a dispute since money would be detracted from the stake nonetheless if a dispute occurs.

It may be argued that intermediate nodes do not have an incentive in disputing a wrong result on the blockchain at all since it would detract partially their money; however, intermediate nodes should be run only by the parties interested in the correct execution of the smart contract, if no party has an incentive in enforcing the correct execution of the smart contract, then no one can complain about its incorrect execution.

With this solution, parties do not have an incentive in proposing wrong windows to the blockchain, as long as every party believes that at least one of them is honest, then every wrong window proposed would be challenged on-chain, detracting staked money from every intermediate node, even from the dishonest node.

This incentive system, however, makes delegating the execution of a smart contract to a set of external intermediate nodes insecure. In fact, if no intermediate node has an incentive in making the smart contract execute correctly, then they may collude to gain the maximum rewards, or the least expenditures, from the smart contract execution, since there is no penalty for the intermediate nodes that behave incorrectly and no incentive to the intermediate nodes that detect the incorrect behavior of these nodes. For these reasons, it is better that intermediate nodes be managed by the parties of the contract.

**Intermediate Node procedures**

Hereinafter, it is detailed which procedures are followed by the intermediate nodes to elaborate sensor messages, creating agreement certificates and interacting with the blockchain.

Intermediate node behavior can be described by the internal data structures they hold and the procedures they execute. First, it is described the data structure used by intermediate nodes to represent any smart contract states. Then, the procedures executed by the intermediate nodes are explained.

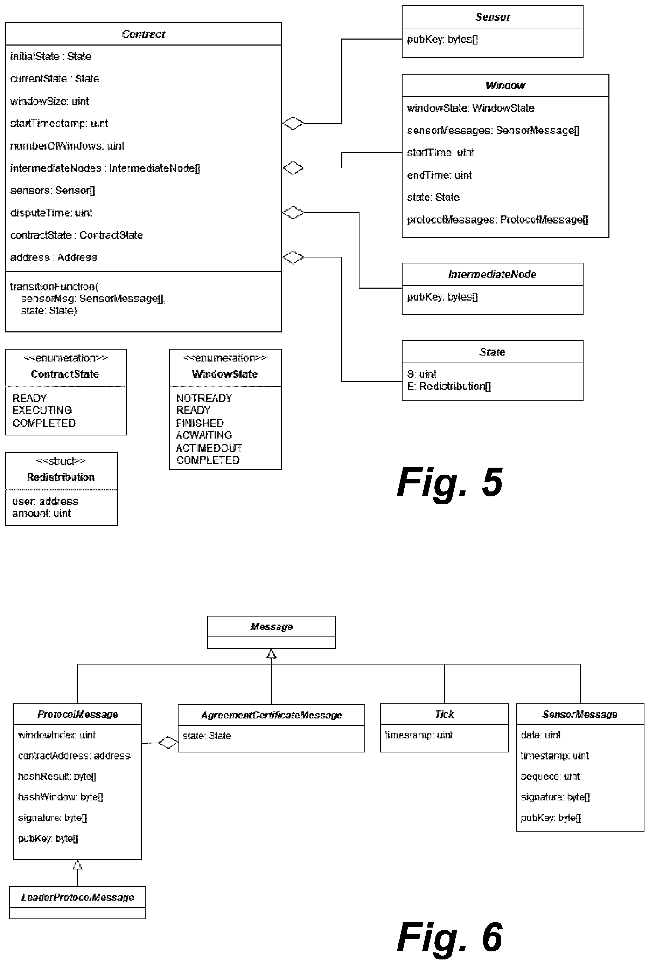

It is assumed that intermediate nodes start with knowledge about a smart contract to operate, these information can be thought to be stored in a list of objects of type *Contract* as shown in Figure 5. The *Contract* class attributes reflect the information of the smart contract stored on-chain and provide a reference to the smart contract on-chain. Any *Contract* object has the following attributes:

- **currentState:** the current state of the state channel;
- **address:** is a reference to the smart contract deployed on-chain, such as an Ethereum address. We are assuming that the blockchain layer is instantiated by an account-based blockchain;
- **intermediateNodes:** references a sequence of IntermediateNode objects containing information about the intermediate nodes, they are used for signature verification purposes;
- **sensors:** references a sequence of sensor objects representing the sensors referenced by the smart contract, they are used for signature verification purposes;
- **windows:** reference to a sequence of Window objects;
- **contractstate:** can assume the values: READY, EXECUTING, COMPLETED. It represents whether contract execution has yet to start (READY), has started and is executing (EXECUTING) or its execution is completed, meaning that the time period of the last window of the contract has ended;
- **numberOfWindows:** the number of windows processable by the referenced smart contract: this is equivalent to $N_w$ in the smart contract formalization;
- **disputeTime:** the dispute period of the smart contract.

Every Contract object also implements a method called *transitionFunction,* this is equivalent to the transition Function *F* defined in the smart contract.

Intermediate nodes can keep track of the messages pertaining to a certain window of data with *Window* objects. *Window* objects are always referenced to by a *Contract* object, and they allow the intermediate node to store the data required to perform the transition function, updating thus the state of the state channel run by them, and to keep track of the messages exchanged by intermediate nodes used for creating the *AgreementCertificate*. The *Window* class has thus the following attributes:

- **sensorMessages:** the sensor messages that comprise this window;

- **startTimestamp:** the timestamp when window execution start;

- **windowsize:** the temporal size of the window;

- **windowIndex:** the index of the window (whether it is the first one, the second one and so on);

- **protocolMessages:** the protocol messages received from the intermediate nodes referencing the window;

- **state**: the state computed by the intermediate node on this window: equivalent to $(s_n, e_n)$;

- **agreementCertificate:** the agreement certficate either generated or received by other intermediate nodes;

- **windowState:** a value that provides information about the operations to perform on the window.

The attribute *windowState,* in particular, offers information to the intermediate node on how to treat the window. This attribute can take the following values:

- **NOTREADY:** means that the window period hasn't started, therefore sensor messages cannot be added to the window;

- **READY:** the window period has started and is not finished yet, therefore sensor messages can be added to the window;

- **FINISHED:** the window period has ended and the intermediate node can use it for executing the *off-chain function;*

- **ACWAITING:** the intermediate node is waiting to receive an agreement certificate;

- **ACTIMEDOUT:** the agreement certificate has not been received in time, therefore a dispute should be started on chain;

- **ACCOMPLETED:** the agreement certificate for the window has been either received or generated successfully.

Messages received and sent by the intermediate nodes can be modeled as classes specializing a generic *Message* class as shown in Figure 6.

The types of messages an intermediate node can handle are *protocol message, leader protocol message, sensor message, Agreement certificate* and *Tick.*

In particular, the leader protocol message class specializes the protocol message class because it uses the same fields any protocol message has. The *tick* message is never mentioned in the previous section because it is an internal message generated locally by the intermediate node at short regular intervals: it is an artifact used for timing purposes.

Now, the procedures performed by intermediate nodes when receiving messages are described. Intermediate node behavior depends on the messages it receives, as it is shown in Algorithm 5.1 below.

**Algorithm 5.1** Receive message procedure

```
procedure receive(Message msg){

    if(msg.type is SensorDataMessage){
        parseSensorMessage(msg)
    }

    if(msg.type is Tick){
        parseTick(msg)
    }

    if(msg.type is ProtocolMessage){
        parseProtocolMessage(msg)
    }

    if(msg.type is AgreementCertificateMessage){
        parseAgreementCertificateMessage(msg)
    }
}
```

When a *sensor message* is received, the intermediate node should put it in the appropriate window. To do so, the procedure *parseSensorMessage* of Algorithm 5.2 below is executed.

**Algorithm 5.2** Parse sensor message procedure

```
parseSensorMessage(SensorMessage msg){
    require(isCorrectlySigned(msg))
    require( Contract.startTimestamp ≤ msg.timestamp)
    require(Contract.startTimestamp + (Contract.windowSize ·
        Contract.windowNumber) ≥ msg.timestamp)

    window ← getWindow(msg.timestamp)
    addSensorMessageWindow(msg,window)
}
```

The *parseSensorMessage* procedure takes a sensor message in input and performs some preliminary checks to ensure the sensor message was sent by a registered sensor of the contract. The checks performed are to ensure that the sensor message is correctly signed (*require*(*isCorrectlySigned*(*msg*) in the pseudocode)
and that the timestamp of the sensor message falls between the start time of the smart contract and its end time (*start Time stamp* + (*numberOfWindows · windowSize*) ).
If the checks pass, then the window that should contain it is selected and the sensor message is added to its *sensorMessages* list.
Instead, *ProtocolMessages* are the building block of *Agreement certificates*. When an intermediate node receives a protocol message, it should do the following:

- Assembling the agreement certificate, in case the intermediate node is the *leader* of the window;
- Sending back its own protocol message to the intermediate node if the state proposed in the received message is the same as the one computed locally;
- Storing it in the appropriate *Window* object in order to assemble an agreement certificate later on when the node has received every intermediate node protocol message.

In order to do so, the protocol message is passed as an argument to the *parseProtocolMessage* procedure of Algorithm 5.3 below.

**Algorithm 5.3** Parse protocol message procedure

```
parseProtocolMessage(ProtocolMessage pm){
    require(pm.window_index >= 0
    require(pm.window_index < Contract.numberOfWindows)
    require(isCorrectlySigned(msg))

    window ← getWindowProtocolMessage(pm)
    if(pm is LeaderProtocolMessage){
        parseLeaderProtocolMessage(pm, window)
    }else{
        parseStandardProtocolMessage(pm,window)
    }
}
```

The *parseProtocolMessage* procedure performs the following checks:

- whether the protocol message is correctly signed by a registered intermediate node;

- whether it refers to a valid window for the smart contract (i.e. the window index n is between 0 and *window number*).

If all the checks pass, then the procedure will retrieve the window object that the protocol message refers to (*getWindowProtocolMessaage*(*pm*) in the pseudocode)
and it will check whether the received protocol message is a *leader protocol message* or a *standard protocol message.*
A leader protocol message is a protocol message referencing window $w_n$ sent by a node *i* for which *leader*($w_n$) = *i*, with *leader: W → I* being a function that maps windows to nodes.

Leader protocol messages should be received only by non-leader nodes and these receiving nodes should send back a response to the sender in the form of a standard protocol message.

On the other hand, non-leader protocol messages should be received only by leader nodes which will use them to generate an agreement certificate. For this reason, leader protocol messages and standard protocol messages are handled by two different procedures, namely *parseLeaderProtocolMessage* procedure and the *parseStandardProtocolMessage* procedure. The *parseLeaderProtocolMessage* is detailed below in Algorithm 5.4:

### Algorithm 5.4 parse leader protocol message procedure

```
parseLeaderProtocolMessage(LeaderProtocolMessage pm, window){
    require(! thisNodeIsLeader(window))
    require(window.state = FINISHED)

    protocolMessageAnswer ← generateProtocolMessage(window)
    send(protocolMessageAnswer, sender(pm))
    window.windowState ← ACWAITING;
}
```

The parseLeaderProtocolMessage procedure makes these preliminary checks before continuing:

- it checks that the receiving intermediate node is not the leader for that window. If the receiving node is the leader, then it should not be possible for him to receive a leader protocol message and therefore should ignore them if they arrive; and
- it checks whether the state of the window is *FINISHED.*

Leader protocol messages received before a window has reached the *FINISHED* state should be ignored since the intermediate nodes may not have received the required sensor messages to complete the window. Similarly, the other window states (ACWAITING, ACTIMEDOUT, COMPLETED) imply that a valid leader protocol message for that window has been received in the past, this is why a new leader protocol message is ignored if the window is in one of these states.

If these checks are passed, the intermediate node assembles a *protocol message* that is sent back to the leader node (*send(protocolMessageAnswer,sender(pm))*)*in* the pseudocode)

The state of the window object is also changed to *ACWAITING,* meaning that the intermediate node is now waiting to receive a valid agreement certificate.

The *ParseStandardProtocolMessage* procedure is detailed along the following Algorithm 5.5 below:

### Algorithm 5.5 Parse standard protocol message procedure

```
parseStandardProtocolMessage(ProtocolMessage pm, window){
    require(thisNodeIsLeader(window))
    require(window.windowState ← FINISHED)

    addProtocolMessageToWindow(pm, window)

    if(requiredProtocolMessagesForAgreementCertificate(window))
        {
        AC ← generateAgreementCertificate(window)
        window.AgreementCertificate ← AC
        broadcast(AC)
        window.windowState ← COMPLETED
        }
}
```

It requires that the receiving node is the leader of the window and that the window state referenced by the protocol message is in the *FINISHED* state.

This is because regular protocol messages interest only the leader node that has the role of using them to generate and propagate an agreement certificate and they would not be able to create such an agreement certificate if the window state is not *FINISHED.*

With this procedure, the leader stores the *valid* protocol message received by the intermediate nodes. The leader node considers a protocol message to be *valid* if the message *hashState* and *hashWindow* are the same as the hash of the state and the hash of the window that the leader node stores locally.

The *parseAgreementCertificate* procedure is detailed along the following Algorithm 5.6 below:

**Algorithm 5.6** Parse agreement certificate procedure

```
parseAgreementCertificate ( AgreementCertificateMessage  msg ){
    require ( isACValid ( msg ) )

    window ← getWindowACMessage ( msg )
    parseACWindow ( msg , window )
}


parseACWindow ( AgreementCertificateMessage  msg ,  WindowInfo
    window ){
    require ( window . state = ACWAITING )
    require ( msg . state = window . state )

    window . agreementCertificate ← toAgreementCertificate ( msg )
    window . state ← COMPLETED
}
```

This procedure is executed by intermediate nodes when an agreement certificate message is received. Upon receiving an agreement certificate, the intermediate node checks that the agreement certificate is valid. If that is the case, then the node will retrieve the window referenced by the agreement certificate (*window ← getWindowACMessage*(*msg*) in the pseudocode) and will further check that its state is *ACWAITING,* meaning that the node is waiting to receive an agreement certificate for the window but hasn't received one yet. The agreement certificate is stored in the appropriate window object and the window is set to the *COMPLETE* state, meaning that no further actions are required to be performed.

*Ticks* are used to change the window state when certain time limits are exceeded. In fact, when the *parseTick* procedure is called, as detailed along the following Algorithm 5.7 below:

**Algorithm 5.7** Parse tick procedure

```
parseTick(Tick tick){
    foreach(window in windows){
        parseTickWindow(tick,window)
    }
}

parseTickWindow(Tick tick,Window window){
    switch(window.windowState)

        case NOT_READY:
        if(tick.timestamp >= window.startTimestamp)
        {
        window.windowState ← READY
        }

        case READY:
        if(tick.timestamp >
        (window.startTimestamp + window.windowSize))
        {
        window.windowState ← FINISHED
        }


        case FINISHED:
        window.state ← applyTransitionFunction(window)
        async start disputeWindowProcess(window)

        if(isThisNodeLeader(window))
        {

        leaderProtocolMsg ← generateLeaderProtocolMessage(
            window)
        broadcast(leaderProtocolMsg)
        window.windowState ← COMPLETED

        }else if(tick.timestamp >
        windowACTimeOutTimestamp(window))
        {
        window.windowState ← ACTIMEDOUT
        }

        case ACWAITING:
        if(tick.timestamp > windowACTimeOutTimestamp(window))
        {
        window.windowState ← ACTIMEDOUT
        }

        case COMPLETED:
        if(tick.timestamp > windowACTimeOutTimestamp(window))
        {
        window.windowState ← ACTIMEDOUT
        }
}
```

it retrieves every *window* object of every contract and depending on the state of the window performs some checks before changing their state if needed. The window state transitions performed are the following:

- from **NOTREADY** to **READY** state if the tick timestamp is larger than the window *startTimestamp* attribute;

- from **READY** to **FINISHED** state, if the tick timestamp is larger than the window startTimestamp + windowSize;

- from **FINISHED** to **COMPLETED** if the intermediate node is the leader node. before transitioning the intermediate node assembles a *leader protocol message* and sends it to the other intermediate nodes;

- from **FINISHED** to **ACTIMEDOUT** if the tick timestamp is larger than a timeout period waited by the node for receiving a valid agreement certificate;

- from **ACWAITING** to **ACTIMEDOUT** if the tick timestamp is larger than a timeout period waited by the node for receiving a valid agreement certificate;

- from **COMPLETED** to **ACTIMEDOUT** if if the tick timestamp is larger than a timeout period waited by the node for assembling a valid agreement certificate.

Finally, when a window turns into the *finished* state, it becomes possible to communicate to the smart contract on-chain the state obtained from applying the *offchain function* on it.

For this reason, it is necessary that every intermediate node checks that invalid results are not proposed on-chain by any possible dishonest intermediate node. The process that intermediate nodes run to solve possible disputes arising for a certain window is the *dispute window* process, as detailed along the following Algorithm 5.8 below:

The *dispute process* is started asynchronously as a window transitions to the *FINISHED* state, taking as argument the Window object representing the window on which disputes may occur. The process will then wait a *preDisputePeriod,* in order to mitigate the risks of multiple nodes providing the same window to the blockchain, and then will communicate with the on-chain smart contract in order to retrieve data about its state.

## **Algorithm 5.8** dispute process pseudocode run by intermediate nodes for a given window

```
process disputeWindowProcess(Window window) {
    watingPeriodPreDispute ← getWatingPeriodPreDispute(window)
    waitingPeriodPostDispute ← getWaitingPeriodPostDispute(
        window)
    wait(watingPeriodPreDispute)
    do until(endDisputePeriod(window) < currentTime )
    {
        if(isWindowProposed(window))
        {
            if(window.state = COMPLETED)
            {
                if(H(proposedWindow(window)) ≠ H(getAC(window).
                    state))
                {
                //calls the disputeWindow method
                //of the Dany smart contract
                disputeWindow(window)
                }
            }

            if(window.state = ACTIMEDOUT)
            {
                if(windowContainsUnproposedMessages(window))
                {
                disputeWindow(window)
                }
            }
        }
        else
        {
            if(satisfiedDisputeWindowRequireStatement(window))
            {
            disputeWindow(window)
            }
            else
            {
            disputeWindowAC(window)
            }
        }
```

```
        }
        wait(waitingPeriodPostDispute)
        if( ! isResultAcceptedOnChain())
        {
        //call the perform transition method of the
        //Dany smart contract
        performTransition(window)
        }
    }
```

The data retrieved are data about the window previously proposed. Intermediate nodes, in fact, need to know whether a window has been proposed on-chain because an intermediate node proposing an invalid window may make the smart contract accept it if the dispute period ends and other intermediate nodes haven't disputed it.

Moreover, they need to know what is the window that has been used to propose a result to ensure that a state transition is not performed with an incomplete window.

The dispute process performs polling on the smart contract to check whether a window has been proposed for the given window. If a window has been proposed on-chain, then the intermediate node will dispute it if it does not contain the messages in its local window.

The result is disputed by calling the appropriate exposed smart contract method, the method to be called is determined by whether the blockchain knows the previous state or whether it doesn't.

Interaction with the blockchain layer doesn't end with this. In fact, a state resulting from the application of the transition function to a window can be considered accepted by the smart contract only when the *perform Transition* method is called.

For this reason, the process will wait until the dispute period for the given window has ended and then will wait for an additional *postDisputePeriod* that is different for every intermediate node referenced in the smart contract to avoid multiple nodes calling the same contract when not necessary.

After that, the node checks whether the *perform Transition* method has already been called by any other intermediate node. If that is not the case, then he will call it, making thus the smart contract transition to a new state. The *blockchain window process* ensures thus that as long as at least one intermediate node is honest and active, the smart contract on-chain accepts only correct windows.

**Example**

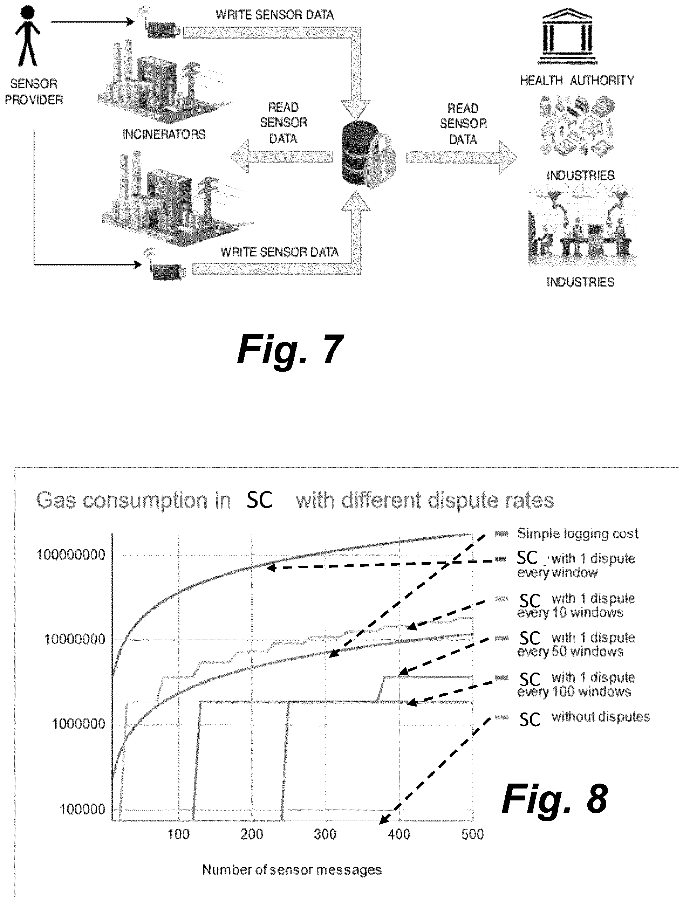

The incineration of waste for producing energy significantly contributes to the total energy supply of the European Union. The waste-to-energy process that incinerators perform, involves the burning of waste products and this results in the generation of polluting substances. Figure 7 depicts such a scenario.

Incinerators can have a significant impact on the dispersion of pollutants in the air, so their behavior is regulated by law. In fact, the *Italian and European emission regulations* establish thresholds on the concentration of *carbon monoxide* that can be emitted. The law limit values of carbon monoxide concentration are 150 mg/Nm$^3$, 100 mg/Nm$^3$ and 50 mg/Nm$^3$ as an average value over 10 minutes, 30 minutes and 1 day.

In this scenario, a sensor produces at a constant rate data measuring the levels of pollution in the air as an integer number. When the average pollution in a given window of time exceeds a predetermined threshold, a fine should be applied to a user.

Using a public blockchain, such as Ethereum, to hold the sensor reading data and to execute the smart contract responsible of fining the incinerator owners in case of misbehavior, is unfeasible.

In fact, monitoring a single incinerator would require committing to the blockchain around 500 transactions every 5 seconds. The transaction throughput of Ethereum is estimated to be around 10 tx/s, which is too low for our application. Even if we were to adopt other public distributed ledger with higher throughputs we would still incur in the problem of fees.

Submitting transactions to public blockchains requires the submitter to pay a fee that is proportional to the computational efforts required to execute the code that the transaction triggers on the blockchain. It is estimated that a single incinerator system would be responsible of producing 125TB of data in 5 years; committing this amount of data to a public blockchain, if possible, would cost millions of dollars. For these reasons, the solution involving the use of a public blockchain has been discarded.

Then, the pollutant emission scenario was simulated by implementing a smart contract platform written in Solidity in a local EVM compatible blockchain. The implemented smart contract is initialized with the following arguments:

- *Intermediate node addresses:* the Ethereum addresses of the intermediate nodes required to run the state channel: in our configuration we initialize it with two different Ethereum addresses;

- *Sensor addresses:* The Ethereum addresses of the sensors required to produce the data processed by the state channel: in our case we initialize the smart contract with one sensor address;

- *Dispute time:* the dispute period of the smart contract set to 10 seconds;

- *Stake:* An amount of cryptocurrency Kstaked by the intermediate nodes in the contract;

- *Number of windows:* ($N_w$) the number of windows processable by the smart contract;

- *Start timestamp:* The timestamp when the contract execution should start;

- *Initial state:* the initial state ($s_0, e_0$) of the state channel: represented as a struct in solidity (see algorithm 6.1 below);

- A *transition function* (see algorithm 6.2 below) that returns a value that depends on whether the average calculated on a window of data exceeded a certain threshold or not.

The smart contract exploits the above detailed three dispute resolution methods *dispute Window* (see algorithm 6.3 below), *disputeWindowAC* (see algorithm 6.5 below) and *perform Transition* (see algorithm 6.4 below) allowing nodes to dispute on chain.

---

**Algorithm 6.1** Structs used to represent the state

---

```
struct State{
    uint s;
    SingleRedistribution[] e;
}

struct SingleRedistribution{
    address receiver;
    uint amount;
}
```

## Algorithm 6.2 Transition function written in solidity used in the Dany smart contract

```
function transitionFunction(StateLibrary.State memory
    _previous_state, Structs.Window memory _window) public
    pure returns (StateLibrary.State memory) {


    StateLibrary.SingleRedistribution[_previous_state.e.
        length] memory redistribution;
    StateLibrary.SingleRedistribution[] memory
        redistribution = new StateLibrary.
        SingleRedistribution[](_previous_state.e.length);

    int threshold = 30;
    int sum = 0;
    for(uint i = 0; i<_window.sensor_messages.length; i++){
        sum = _window.sensor_messages[i].data.data;
    }

    int avg = sum / int(_window.sensor_messages.length);

if(avg > threshold){

    if(_previous_state.e[0].amount >= 100){
        redistribution[0].amount = _previous_state.e[0].
            amount - 100;
        redistribution[1].amount = _previous_state.e[1].
            amount + 100;
    }
}
```

## Algorithm 6.3 DisputeWindow in Solidity

```
function disputeWithWindow(Structs.Window calldata _window,
    uint256 _window_index)
        external
{
    require(isDisputeTime(_window_index));
    require(windowIndexIsValid(_window_index));
    require(!timestampedDisputedStates[_window_index].
        accepted);
    require(
        _window_index == 0 ||
            timestampedDisputedStates[_window_index - 1].
            accepted
    );

    disputeWithWindowPrivate(_window, _window_index,
        current_state); //should check that current state is
        always updated

}
```

```
        disputeWithWindowPrivate ( _window , _window_index ,
            current_state ) ; //should check that current state i
            always updated

    }

    function disputeWithWindowPrivate ( Structs . Window calldata
        _window , uint256 _window_index , StateLibrary . State
        memory _previousState ) public {
        require ( windowIsOrdered ( _window ) ) ;
        require ( addNewValidMessagesToStoredWindow ( _window ,
            _window_index ) ) ;

        StateLibrary . State memory computedState =
            transitionFunction ( _previousState ,
            timestampedDisputedStates [ _window_index ] . window ) ;
        addStateToStorage ( computedState ,
            timestampedDisputedStates [ _window_index ] . state ) ;

        timestampedDisputedStates [ _window_index ] . state_propose
            = true ;
        timestampedDisputedStates [ _window_index ] . state_propose
            = true ;
        timestampedDisputedStates [ _window_index ] .
            lastupdated_timestamp = block . timestamp ;

    }
```

**Algorithm 6.4** performTransition function in solidity

```
function performTransition ( uint256 _window_index ) external {
        require ( ( timestampedDisputedStates [ _window_index ] .
            lastupdated_timestamp + dispute_time ) < block .
            timestamp ) ;
        require ( timestampedDisputedStates [ _window_index ] .
            state_proposed == true ) ;
        require ( timestampedDisputedStates [ _window_index ] .
            accepted == false ) ;
        current_state = timestampedDisputedStates [ _window_index
            ] . state ;
        timestampedDisputedStates [ _window_index ] . accepted =
            true ;
        if ( _window_index == ( number_of_windows − 1 ) ) {
            performRedistribution ( current_state . e ) ;
        }
    }
```

## Algorithm 6.5 disputeWindowAC in solidity

```
function disputeWithWindowAndPreviousAgreementCertificate(
        Structs.Window calldata _window,
        Structs.AgreementCertificate calldata
            _agreement_certificate,
        uint256 _window_index
    ) external {

        require(!timestampedDisputedStates[_window_index].
            accepted);
        require(!timestampedDisputedStates[_window_index-1].
            accepted);
        require(_window_index > 0 && _window_index <
            window_size);
        require(isDisputeTime(_window_index));
        require(isAgreementCertificateValid(
            _agreement_certificate)); require(
            _agreement_certificate.signed_protocol_messages[0].
            protocol_message.window_identifier == _window_index
            -1);

        timestampedDisputedStates[_window_index-1].
            agreement_certificate = _agreement_certificate;
        timestampedDisputedStates[_window_index-1].
            agreement_certificate_proposed = true;
        addStateToStorage(_agreement_certificate.state,
            timestampedDisputedStates[_window_index-1].state);
        timestampedDisputedStates[_window_index].state_proposed
            = true;
        timestampedDisputedStates[_window_index-1].accepted =
            true;
        addStateToStorage(timestampedDisputedStates[
            _window_index-1].state, current_state);
        disputeWithWindowPrivate(_window, _window_index,
            current_state);
    }
```

| Size | perform Transition method | dispute window method | AC method |
|------|---------------------------|-----------------------|-----------|
| 1 | 72938 | 371458 | 1018325 |
| 2 | 72938 | 565003 | 1211884 |
| 3 | 72938 | 758575 | 1405469 |
| 4 | 72938 | 952144 | 1599051 |
| 5 | 72938 | 1145715 | 1792647 |
| **Table 1** | | | |

The results, presented in Table 1 above, show the amount of gas used per method call with different window sizes. The size column specifies the number of messages in the window.

It is possible to observe that the number of sensor messages in a window does not affect the cost of the perform Transition method while the costs of dispute Window method and AC method increase as the number of messages in the window increases. This is because dispute Window method and AC method take the window as input and must perform computation on it (applying the transition function on it) and they have to perform other checks on the window. However, the *perform Transition* gas cost remains constant since its behavior is that of accepting a *state* that was previously computed by either calling the *dispute Window method* or *AC* method. The gas requirements of such methods are high; this becomes more evident if we compare these costs with the cost of logging one sensor message in a simple logging smart contract (see algorithm 6.6 below).

**Algorithm 6.6** Logging smart contract written in Solidity

```
contract StorageContract{

    address sensor_address;
    address operator;
    Structs.SensorMessage[] sensor_messages_array;

    constructor(address _sensor_address, address _operator){
        sensor_address = _sensor_address;
        operator = _operator;
    }

    function addSensorMessage(Structs.SensorMessage memory
        _sensor_message) public {
        require(msg.sender == operator);
        require(isValidSensorMessage(_sensor_message));
        sensor_messages_array.push(_sensor_message);
    }

    function isValidSensorMessage(Structs.SensorMessage memory
        _sensor_message)
        public
        view
        returns (bool)
    {
        address signer = StructUtils.
            getSignerAddressOfSensorMessage(_sensor_message);
        return sensor_address == signer;
    }

}
```

Logging one sensor message in such a contract costs 23424 gas units, a significantly lower cost than the smart contract method calls. Using smart contract SC platform becomes therefore convenient only if disputes are unlikely to be raised.

In Figure 8 it is shown the amount of gas consumed by an intermediate node for the smart contract, assuming that every window contains five sensor messages with varying *dispute rates.*

With *dispute rate we* mean the number of disputes raised when a certain number of windows has been computed. These values are also compared with the amount of gas needed for logging sensor messages using the logging smart contract.

It is possible to observe that the smart contract makes an intermediate node spend less gas if the number of disputes raised during the execution is inferior to one dispute every fifty processed windows, while, if disputes where to arise every ten windows, the logging smart contract is still preferable.

Scenarios in which the rate at which sensor messages are produced is fixed, or close to fixed, and the number of disputes to be raised in a certain period is expected to be within certain extremes, may allow users to fine tune the smart contract, requiring intermediate node owners to stake only a slightly higher amount of money they expect to spend during the execution.

In a scenario in which disputes do not occur, the platform could be able to process thousands of sensor messages per second, while public blockchains can only process a very small number of transactions per seconds.

However, it is not always the case that disputes do not occur. Unfortunately, if the rate of sensor messages produced is extremely high and disputes are expected to occur, it may not even be possible to implement the platform on top of a public blockchain such as Ethereum. This is because blockchains such as Ethereum produce blocks with a limited block size, meaning that it is not possible to create blocks containing transactions spending more gas than the maximum allowed.

A smart contract that manipulates windows containing an excessive number of sensor messages may not be implemented in such blockchains since it would make it impossible to solve arising disputes. Consortium blockchains, however, may provide a suitable blockchain layer for demanding smart contracts since they may be set with high block size and block creation rate. The results obtained show that it is possible to improve the scalability of a blockchain by running the platform as a second layer on top of it.

Blocks of the block diagrams and flow diagrams support combinations of means for performing the specified functions, combinations of elements or steps for performing the specified functions, and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

To the above-described process for the execution of smart contracts, a man skilled in the art, to meet further and contingent needs, may make several further changes and variants, all of which are also included in the scope of protection of this invention, as defined by the attached claims.

## Claims

1. Computer implemented management process for smart contract execution of on a blockchain, through a platform architecture comprising three layers: a main blockchain layer (2) wherein at least one on-chain smart contract (SC) is stored; a set of intermediate nodes (5) forming a distributed intermediate node layer (3), and a plurality of sensor devices (7) grouped in at least one sensor layer (4) producing an input stream of sensor data to carry out a transition from a current state to a next state of a finite-state machine defined by said main blockchain layer (2),

   wherein each sensor device (7) owns a sensor public key to univocally identify that specific sensor device (7), and said sensor layer (4) can be considered a trusted source of information,
   wherein the sensor devices (7) of the sensor layer (4) forward sensor messages (6), comprising a timestamp, to the intermediate nodes (5) through a sensor flow of data made of a stream of sensor messages (6),
   wherein said intermediate nodes (5), receiving said sensor flow of data, constitute a distributed layer of devices reading and executing the at least one on-chain smart contract (SC) and execute it in a decentralized manner by using each a local off-chain smart contract (SC') copy of the on-chain smart contract (SC) simulating said finite-state machine thereby defining a plurality of constantly off-chain updated state changes in respective state channels,
   wherein, when every intermediate node (5) agrees on a certain state change, a related agreement certificate (AC) is issued by a leader intermediate node (5') and sent to the other intermediate nodes (5), and, otherwise, when the intermediate nodes (5) cannot reach an agreement on the state of a state channel at a certain step, a dispute starts at said main blockchain layer (2), allowing the on-chain smart contract (SC) to carry out a state transition.

2. The process for smart contract execution according to claim 1, wherein the sensor devices (7) are tamper-proof device and have at least a limited amount of memory and CPU computing capacity, with a connectivity and cryptographic capabilities to send sensor messages to the intermediate nodes (5).

3. The process for smart contract execution according to claim 1, wherein the smart contract (SC) is first deployed on the blockchain layer (2) that specifies both the finite state machine and window information to be used as input for a finite state machine transition function, along with the devices responsible for physically running the state channel.

4. The process for smart contract execution according to claim 1, wherein the intermediate nodes simulate a state change when a proof of unanimous agreement of intermediate nodes could be generated for it, or when the on-chain smart contract accepts the state $(s_1, e_1)$ after an on-chain dispute has been settled and, once the state channel has transitioned to a next state, then another period of time is waited to carry out a transition to the following state.

5. The process for smart contract execution according to claim 1, wherein an intermediate node (5) starts a dispute either when it could not receive a valid agreement certificate (AC) for a given window of sensor flows, before a timeout expires, or when the intermediate node (5) detects that another intermediate node (5) has started a dispute on-chain.

6. The process for smart contract execution according to claim 5, wherein, to carry out an on-chain dispute, an intermediate node (5) provides the blockchain layer (2) with its local window of data and an index n, thereby the smart contract (SC) compute the merge of the local windows of the intermediate nodes waiting along a dispute period that is increased each time a window containing more messages than the previous ones is proposed on-chain, thus allowing the other intermediate nodes (5) to provide their local window, and then, after the dispute period has ended, the smart contract (SC) executes a state transition on-chain, wherein, once an intermediate node can make the smart contract (SC) reach a last state transition, it unlocks a related action, such as a redistribution of funds.

7. The process for smart contract execution according to claim 5, wherein, whenever a dispute among intermediate nodes occurs for a state, and the smart contract (SC) does not know the previous state, every disputing intermediate nodes (5) requires three arguments: the local window of the intermediate node; an index; and the previous agreement certificate, thus allowing the smart contract (SC) to know what is the previously unanimous agreed state reached off-chain, then, after a dispute period has ended, the smart contract (SC) executes a state transition on-chain, wherein, once an intermediate node can make the smart contract (SC) reach a last state transition, it unlocks a related action, such as a redistribution of funds.

8. The process for smart contract execution according to claim 5, wherein intermediate nodes are required to lock a certain amount of money in the smart contract at the moment of deployment that will be used to incentivize their correct behavior,

wherein the staked money is used to repay the transaction costs borne by the disputers when they call the smart contract methods for solving disputes,
wherein, each time a smart contract method is called successfully by an intermediate node, the smart contract equally detracts the staked money from every registered intermediate node on the contract, thus a party is not encouraged to wait other parties to start a dispute since money would be detracted from the stake nonetheless if a dispute occurs.

9. The process for smart contract execution according to claim 1, wherein, when an intermediate node receives a sensor message, the intermediate node put it in an appropriate window, then the intermediate node checks whether the sensor message was sent by a registered sensor device of the off-chain smart contract, whether the sensor message is correctly signed, and whether the timestamp of the sensor message falls between the start time of the smart contract and its end time, then said window is selected and the sensor message is added to a sensor message list.

*Fig. 1*

*Fig. 2*

*Fig. 3*

*Fig. 4*

**Contract**

initialState : State

currentState : State

windowSize: uint

startTimestamp: uint

numberOfWindows: uint

intermediateNodes : IntermediateNode[]

sensors: Sensor[]

disputeTime: uint

contractState : ContractState

address : Address

transitionFunction(
    sensorMsg: SensorMessage[],
    state: State)

**Sensor**

pubKey: bytes[]

**Window**

windowState: WindowState

sensorMessages: SensorMessage[]

startTime: uint

endTime: uint

state: State

protocolMessages: ProtocolMessage[]

**IntermediateNode**

pubKey: bytes[]

**State**

S: uint
E: Redistribution[]

<<enumeration>>
**ContractState**

READY
EXECUTING
COMPLETED

<<enumeration>>
**WindowState**

NOTREADY
READY
FINISHED
ACWAITING
ACTIMEDOUT
COMPLETED

<<struct>>
**Redistribution**

user: address
amount: uint

# Fig. 5

**Message**

△

**ProtocolMessage**

windowIndex: uint

contractAddress: address

hashResult: byte[]

hashWindow: byte[]

signature: byte[]

pubKey: byte[]

**AgreementCertificateMessage**

state: State

**Tick**

timestamp: uint

**SensorMessage**

data: uint

timestamp: uint

sequece: uint

signature: byte[]

pubKey: byte[]

△

**LeaderProtocolMessage**

# Fig. 6

36

## Fig. 7

Gas consumption in SC with different dispute rates

- Simple logging cost
- SC with 1 dispute every window
- SC with 1 dispute every 10 windows
- SC with 1 dispute every 50 windows
- SC with 1 dispute every 100 windows
- SC without disputes

Number of sensor messages

## Fig. 8

Europäisches
Patentamt
European
Patent Office
Office européen
des brevets

# EUROPEAN SEARCH REPORT

**Application Number**

EP 24 19 0733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SMAHI ABLA ET AL: "A blockchainized privacy-preserving support vector machine classification on mobile crowd sensed data", PERVASIVE AND MOBILE COMPUTING, ELSEVIER, NL, vol. 66, 19 June 2020 (2020-06-19), XP086246546, ISSN: 1574-1192, DOI: 10.1016/J.PMCJ.2020.101195 [retrieved on 2020-06-19] * sections 1, 1.1, 2.2, 3.2, 3.2.1, 4.3, 5.2, 5.2.1, 6.3; figure 2 * | 1-9 | INV. H04L9/32 H04L9/00 |
| A | ANKIT GANGWAL ET AL: "A Survey of Layer-Two Blockchain Protocols", ARXIV.ORG, CORNELL UNIVERSITY LIBRARY, 201 OLIN LIBRARY CORNELL UNIVERSITY ITHACA, NY 14853, 17 April 2022 (2022-04-17), XP091205209, * section III-A-1) * | 6,7 | |
| A | LYDIA NEGKA ET AL: "ORIGAMI: A flexible state channels design for public blockchain systems", ARXIV.ORG, CORNELL UNIVERSITY LIBRARY, 201 OLIN LIBRARY CORNELL UNIVERSITY ITHACA, NY 14853, 20 April 2023 (2023-04-20), XP091489752, * section 4.2.2 * | 6,7 | |

**TECHNICAL FIELDS SEARCHED (IPC)**

H04L

The present search report has been drawn up for all claims

| Place of search | Date of completion of the search | Examiner |
|---|---|---|
| Munich | 16 December 2024 | Veillas, Erik |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LESLIE LAMPORT** ; **ROBERT SHOSTAK** ; **MARSHALL PEASE**. The ''byzantine general'' problem. *ACM Transactions on Programming Languages and Systems*, 1982, vol. 4 (3), 382-401